# EUROPÄISCHE PATENTSCHRIFT

(11) **EP 1 315 992 B1**
(45) Veröffentlichungstag und Bekanntmachung des Hinweises auf die Patenterteilung: **20.12.2006**
(21) Anmeldenummer: 01974007.5
(22) Anmeldetag: 29.08.2001
(51) Int. Cl.: G02B 6/42

(54) **KOPPELVORRICHTUNG UND VERFAHREN ZUR HERSTELLUNG HIERFÜR**
COUPLING DEVICE AND METHOD FOR PRODUCTION THEREOF
DISPOSITIF DE COUPLAGE ET SON PROCEDE DE FABRICATION

(30) Priorität: 05.09.2000 DE 10043996
(43) Veröffentlichungstag der Anmeldung: 04.06.2003
(73) Patentinhaber: Cube Optics AG, 55129 Mainz (DE)
(72) Erfinder: SMAGLINSKI, Ingo, 55122 Mainz (DE)
(74) Vertreter: Weber, Dieter
(86) Internationale Anmeldenummer: PCT/DE2001/003394
(87) Internationale Veröffentlichungsnummer: WO 2002/021171

(56) Entgegenhaltungen:
- EP-A- 0 807 981
- EP-A- 0 938 005
- WO-A1-96/22177
- DE-A- 4 008 483
- GB-A- 2 162 335

## Beschreibung

Die vorliegende Erfindung betrifft eine Koppelvorrichtung mit einer reflektierenden Fläche für das Ein- und/oder Auskoppeln von elektromagnetischen Weiten in bzw. aus beispielsweise Lichtwellenieitem sowie ein Verfahren zur Herstellung hierfür.

Insbesondere in der Tele- und Datenkommunäcation ist es mittlerweile üblich, Informationen optisch, das heißt z. B. über Lichtleiter, zu übertragen. Lichtleiter sind Stäbe oder dünne Fasern aus hochtransparenien optischen Materialien, die Licht durch vielfache Totalreflexion in ihrer Längsrichtung übertragen. Das im allgemeinen über eine glatte bzw. polierte Eingangsfläche eintretende Licht folgt allen Biegungen der Faser und tritt am Ende aus einer im allgemeinen ebenfalls polierten Endfläche wieder aus. Die elektrischen Signale, die übertragen werden sollen, werden nach geeigneter Modulation durch einen etetctrooptischen Wandler in Lichtsignale - meist im Infrarotbereich - umgewandelt, in den Lichtwellenleiter eingekoppelt, vom Lichtwellenleiter übertragen und am Ende durch einen opto-elektrischen Wandler in elektrische Signale zurückverwandelt. Um die Übertragungsrate der Lichtwellenleiter zu erhöhen, ist es mittlerweile üblich, mehrere unterschiedliche Nachrichtensignale gleichzeitig über einen Lichtwellenleiter zu übertragen. Dazu werden die Nachrichtensignale moduliert. Für die unterschledlichen Nachrichtensignale werden jeweils unterschiedliche Trägerfrequenzen verwendet, so daß die einzelnen Signale auch als wellencodierte Signale bezeichnet werden. Nach der Übertragung der einzelnen Nachrichtensignate über den Lichtwellenleiter müssen die einzelnen Signale getrennt und demoduliert werden.

In der Technik sind daher Vorrichtungen zum Addieren und Selektieren von wellenlängencodierten Signalen (Licht einer spezifischen Wellenlänge oder spezifischen Wellenlängen) bekannt. Solche Vorrichtungen verwenden optische Fasern, die eine große Informationsträgerdichte aufweisen. Zweck der Vorrichtungen ist es, aus der Vielzahl von übertragenen Informationen eine entsprechende Information bzw. eine entsprechende Wellenlänge abzutrennen. Für diese Abtrennung kommen beispielsweise Schmalbandfilter in Frage, die bestimmte Frequenzen des Lichts nahezu ungehindert passieren lassen, während ausgewählte Frequenzen reflektiert werden. Beim Austritt des Lichts aus der Glasfaser kommt es zwangsläufig jedoch zu einer Strahlaufweitung, die dazu führt, daß entweder die Intensität am Abbildungspunkt, d.h. dem Punkt an dem das gefilterte Licht ausgewertet wird, deutlich reduziert wird, oder die Verwendung von entsprechenden Linsensystemen, z.B. Gradientenindexlinsen (GRIN-Linsen), notwendig ist, um das Licht auf den entsprechenden Abbildungspunkt zu kollimieren.

Die Ausführungsform mit den Linsen hat jedoch den Nachteil, daß diese zum einen recht teuer sind, zum anderen eine sehr genaue Justierung notwendig ist und überdies die abbildenden Eigenschaften auch noch wellenlängenabhängig sind. Die Justierung muß zumeist aufwendig von Hand vorgenommen werden, da der Kerndurchmesser z.B. der single-mode optischen Fasern nur etwa 9 µm beträgt. Es besteht daher ein Bedarf an einer Koppelvorrichtung ohne die geschilderten Nachteile.

Eine inhärente Eigenschaft von Glasfasern ist, daß sie nicht beliebig umgelenkt bzw. gebogen werden können. So ist es beispielsweise nicht möglich, Glasfasern mit einem kleineren Radius als etwa 20 bis 30 mm zu biegen, da dann die Verluste zu hoch werden, weil teilweise die Bedingungen für Totalreflexion nicht mehr erfüllt werden. Überdies bilden sich bei einer zu starken Krümmung Risse und Spannungen innerhalb des Materials. Es müssen daher entsprechend große Umlenkschlaufen gelegt werden, die aber in den optischen Geräten einen nicht unerheblichen Platz einnehmen. Es besteht daher auch ein Bedarf an einer Möglichkeit, den optischen Informationsfluß auf kleinstem Raum umzulenken.

Die WO 96/22177 beschreibt ein Verfahren zur Herstellung einer Anordnung zur Umsetzung von optischen in elektrische Signale, bestehend aus einem Substrat mit Strukturen zur Führung einer Lichtleitfaser sowie zum Umlenken von über die Lichtleitfaser übertragenem Licht. Die Strukturen auf dem Substrat werden durch Herstellen einer Abform von der Kontur eines Formwerkzeuges erzeugt.

Der vorliegenden Erfindung liegt daher die Aufgabe zugrunde, eine Koppelvorrichtung der eingangs genannten Art zur Verfügung zu stellen, die auf engstem Raum ein möglichst verlustarmes Umleiten und Abbilden von Licht erlaubt, wobei gleichzeitig die Koppelvorrichtung leicht zu justieren und kostengünstig herzustellen ist.

Diese Aufgabe wird erfindungsgemäß durch eine Vorrichtung mit den Merkmalen des Anspruchs 1 gelöst. Durch die Krümmung wird erreicht, daß die am Ende einer Glasfaser auftretende Strahlaufweitung durch die gekrümmte Fläche zumindest zum Teil kompensiert wird. Besonders bevorzugt ist eine Ausführungsform, bei der ein Schnitt durch die gekrümmte Fläche in etwa einem Abschnitt einer Parabel, einer Hyperbel oder einer Ellipse entspricht. Mit anderen Worten sind alle Kurven zweiter Ordnung der Ebene, die oft auch als Kegelschnitte bezeichnet werden, abgesehen von einer Geraden als Profil für die gekrümmte Fläche besonders geeignet. Die reflektierende Fläche ist derart gekrümmt, daß sie einem Abschnitt einer gedachten Kurve zweiter Ordnung der Ebene folgt. Diese Formen haben besonders gute abbildende Eigenschaften, so daß sie für die Verwendung in einer Koppelvorrichtung besonders geeignet sind. So wird beispielsweise ein sich im Brennpunkt einer Ellipse aufweitender Strahl, der an der Ellipse reflektiert wird, in den anderen Brennpunkt der Ellipse abgebildet. Somit steht die gesamte an dem ersten Brennpunkt austretende Lichtmenge an dem anderen Brennpunkt nahezu punktförmig zur Verfügung.

Eine besonders zweckmäßige Ausführungsform sieht vor, daß die reflektierende Fläche in etwa die Form eines Abschnitts eines Rotationsparaboloiden, eines Rotationsellipsoiden oder eines Rotationshyperboloiden hat. Mit anderen Worten folgt die reflektierende Fläche zumindest stückweise der Außenfläche eines Rotationskörpers. Dies führt dazu, daß ein Schnitt durch die reflektierende Fläche entlang einer Schnittfläche senkrecht zur Rotationsachse etwa eine Kreisabschnittsform hat, während ein Schnitt entlang einer Ebene, in der die Rotationsachse liegt, in etwa die Form eines Abschnitts einer Parabel, Hyperbel oder Ellipse aufweist. Eine solche gekrümmte reflektierende Fläche hat besonders geeignete abbildende Eigenschaften, so daß die Verluste, die durch das Aus- bzw. Einkoppeln entstehen, sehr gering sind und die Verwendung einer Kollimationsoptik nicht nötig ist.

Beispielsweise kann Licht von einem Sendeelement auf die Koppelvorrichtung bzw. die gekrümmte reflektierende Fläche ausgerichtet werden, so daß die Koppelvonichtung das Licht auf engstem Raum um einen bestimmten Winkel ablenkt, so daß das abgelenkte Licht beispielsweise in eine entsprechenden Empfangseinheit eingekoppelt werden kann. Eine Umlenkung des Lichtes um bis zu 90° und mehr ist auf kleinstern Raum von wenigen Millimetern und weniger durch die erfindungsgemäße Koppelvorrichtung leicht möglich.

Besonders bevorzugt ist zumindest ein Sende- oder Empfangselement in der Nähe eines Brennpunkts der reflektierenden Fläche angeordnet. Unter einem Sende- oder Empfangselement werden alle Licht verarbeitenden Systeme verstanden, wie z.B. (die Enden von) Glasfasern und Lichtwellenleiter, sowie abbildende Systeme, wie z.B. Linsen, Gradientenindexstrukturen oder Spiegeloptiken, aber auch Licht emittierende Strukturen, wie beispielsweise LEDs oder Laser, oder Licht empfangende Strukturen, wie z.B. elektrooptische Wandler oder Photodioden. Die Brennpunkte der gekrümmten Flächen entsprechen den Brennpunkten der gedachten Hyperbel, Parabel oder Ellipse, der die reflektierende Fläche folgt.

So ist beispielsweise eine Parabel als die Menge der Punkte definiert, die von einem festen Punkt, dem sogenannten Brennpunkt, und einer festen Geraden, der sogenannten Leitlinie, gleich weit entfernt sind. Analog dazu ist die Hyperbel als die Menge aller Punkte definiert, für die die Differenz der Abstände von zwei gegebenen festen Punkten, den sogenannten Brennpunkten, konstant ist. Und schließlich ist die Ellipse als die Menge aller Punkte definiert, für die die Summe der Abstände von zwei gegebenen festen Punkten, den sogenannten Brennpunkten, konstant ist.

Folgt beispielsweise das Profil der gekrümmten, reflektierenden Fläche der Form einer gedachten Parabel und ist das Ende eines Sendeelementes, z.B. eine Glasfaser, in der Nähe des Brennpunktes der gedachten Parabel angeordnet, so werden die von der Glasfaser ausgehenden Lichtstrahlen an der parabelförmigen gekrümmten Fläche derart reflektiert, daß die reflektierenden Lichtstrahlen im wesentlichen parallel zueinander verlaufen.

Hat die gekrümmte Fläche hingegen die Form einer gedachten Ellipse, so werden die von einer Glasfaser, die in einem Brennpunkt der gedachten Ellipse angeordnet ist, ausgehenden Lichtstrahlen an der gekrümmten Fläche derart reflektiert, daß sie in dem anderen Brennpunkt der gedachten Ellipse fokussiert werden.

Um die Justierung beispielsweise einer Glasfaser in der Nähe des Brennpunktes der gekrümmten Fläche zu erleichtern, ist mindestens einen Anschlag für die Justierung eines Sende- oder Empfangselementes vorgesehen. Dieser Anschlag kann beispielsweise durch eine ebene Fläche verwirklicht werden, die von dem Brennpunkt der gekrümmten Fläche mit einem Abstand, der etwa dem Faserradius entspricht, angeordnet ist. Dadurch muß die Glasfaser lediglich auf die ebene Fläche aufgelegt werden, um eine exakte Justierung der Glasfaser in eine Richtung zu erreichen.

Bevorzugt sind aber Ausführungsformen, bei denen der Anschlag eine Justierung zumindest in zwei Richtungen oder besonders bevorzugt in drei Richtungen erlaubt.

Der Anschlag ist einstückig mit der reflektierenden Fläche ausgebildet. Durch die einstückige Ausbildung ist eine Justierung des Anschlags in Bezug auf die reflektierende Fläche nicht notwendig. Es muß vielmehr lediglich bei der Herstellung auf eine entsprechend genaue Anordnung des Anschlags geachtet werden.

Die vorliegende Erfindung betrifft ebenso ein Verfahren zur Herstellung einer Koppelvorrichtung. Es ist daher ebenfalls die Aufgabe der vorliegenden Erfindung, ein Verfahren zur Verfügung zu stellen, das die Herstellung der Koppelvorrichtung kostengünstig und mit hoher Genauigkeit erlaubt.

Erfindungsgemäß wird diese Aufgabe durch ein Verfahren mit allen Merkmalen des Anspruchs 8 gelöst. Dies hat den Vorteil, daß die gekrümmte Fläche z. B. mittels Drehen oder Fräsen, vorzugsweise aus Vollmaterial, hergestellt werden kann. Durch das Drehen oder Fräsen ist eine hochgenaue Ausbildung der reflektierenden Fläche möglich. Es versteht sich, daß die gekrümmte Fläche auch durch kleine, ebene Flächen angenähert werden kann, die sich facettenartig aneinanderfügen.

Es versteht sich, daß das Material nahezu beliebig sein kann. Besonders bevorzugt kommt hier Kupfer oder Glas gegebenenfalls auch Silizium oder ein anderes Material mit hoher Wärmeleitfähigkeit und geringem thermischen Ausdehnungskoeffizienten zur Anwendung.

Auch wenn das Material vorzugsweise so gewählt wird, daß es im Bereich der reflektierenden Fläche für den gewünschten Wellenbereich zur Reflexion kommt, so ist es aber selbstverständlich auch möglich, die Koppetvorrfchtung aus einem transparenten Material zu fertigen und In dem reflektierenden Bereich eine reflektierende Schicht, z.B. eine Metallschicht, aufzudampfen. Je nach Anwendungsfall kann es von Vorteil sein, wenn die reflektierende Fläche beschichtet und/oder poliert wird.

Eine besonders zweckmäßige Ausführungsform sieht vor, daß in der gleichen Einspannung, in der die reflektierende Fläche (bzw. deren Negativform oder Ursprungsform) gedreht wird, eine Anschlagfläche senkrecht zur Rotationsachse der reflektierenden Fläche abgedreht wird. Diese Anschlagfläche dient zur Justierung des Sende- oder Emptangselements in der Nähe eines Brennpunkts. Auch hier ist die Ausführung von reflektierender Fläche und Anschlagfläche nicht nur zeitsparend, sondern führt ebenso zu einer hochgenauen relativen Positionierung der Anschlagfläche in Bezug auf die reflektierende Fläche. Die Genauigkeit der Koppelvorrichtung wird daher im wesentlichen von der Güte des Drehwerkzeugs und der Positioniervomchtung der Drehmaschine bestimmt. Die im allgemeinen manuelle Justierung des Drehwerkzeuges im Werkzeughalter und des Werkstücks im Werkstückhalter muß hingegen nicht exakt erfolgen, da es bei der Herstellung der Koppelvorrichtung nicht auf die absolute Genauigkeit, sondern lediglich auf die exakte Positionierung der Anschlagfläche relativ zu der reflektierenden Fläche ankommt.

Mit dem beschriebenen Verfahren kann die erfindungsgemäße Koppelvorrichtung leicht hergestellt werden.

Für manche Anwendungsfälle, insbesondere für die Herstellung von hohen Stückzahlen, kann es jedoch von Vorteil sein, wenn eine Negativform des Dreh- oder Frästeils angefertigt wird und die Koppelvorrichtung durch anschließendes Abformen hergestellt wird. Dies hat zum einen den Vorteil, daß das zeitaufwendige Dreh- oder Fräsverfahren nur einmal durchgeführt werden muß. Danach kann mit Hilfe der Form eine im Prinzip beliebig große Anzahl von Koppelvorrichtungen hergestellt werden. Zum anderen hat das Abformen den Vorteil, daß die Materialwahl zur Herstellung der Koppelvorrichtung deutlich erhöht wird. So muß durch die Abformtechnik nicht mehr Rücksicht auf das Drehverfahren genommen werden. Es ist beispielsweise möglich, die Koppelvorrichtung beispielsweise aus Kunststoff oder Glas mittels Spritzgießen, Heißprägen, Heißpressen oder Gießen zu fertigen.

Es versteht sich, daß die Negativform auch direkt als Dreh- oder Frästeil hergestellt werden kann.

Eine besonders zweckmäßige Ausführungsform sieht vor, daß vor dem Abformen an der Negativform ein Bereich abgestochen wird, so daß das abgeformte Positiv zumindest einen weiteren Anschlag aufweist. Dadurch, daß der mindestens eine weitere Anschlag an der Negativform ausgebildet wird, ist die Herstellung des mindestens einen weiteren Anschlags vereinfacht. Wollte man den weiteren Anschlag bereits an dem Dreh- oder Frästeil anbringen, so müßte dies aufgeschweißt oder angeschraubt werden, da durch das Anfertigen des ersten Anschlags mittels Drehen oder Fräsen notwendlgerwefse alles Material, das für die weiteren Anschlage dienen könnte, weggenommen wird.

Es versteht sich, daß beispielsweise bei der Ausführungsform mit eilipsentärmiger reflektierenden Fläche auch Anschläge in der Nähe beider Brennpunkte vorgesehen werden können.

Weitere Vorteile, Merkmale und Anwendungsrnögtichkeften der vorliegenden Erfindung werden deutlich anhand der folgenden Beschreibung bevorzugter Ausführungsformen sowie der dazugehörigen Figuren. Es zeigen:
- Figuren 1a-d: eine erste Ausführungsform einer Koppelvorrichtung in einer schematischen Ansicht, einer Schnittansicht, einer Seitenansicht sowie einer perspektivischen Ansicht, die in einer erfindungsgemäßen Anordnung verwendet werden kann,
- Figuren 2a-d: eine zweite Ausführungsform einer Koppelvorrichtung in einer schematischen Ansicht, einer Schnittansicht, einer Seitenansicht sowie einer perspektivischen Ansicht, die in einer erfindungsgemäßen Anordnung verwendet werden kann,
- Figuren 3a-d: eine dritten Ausführungsform einer Koppelvorrichtung in einer schematischen Ansicht, einer Schnittansicht, einer Seitenansicht sowie einer perspektivischen Ansicht,
- Figuren 4a und b: eine vierte Ausführungsform einer Koppelvorrichtung in zwei perspektivischen Ansichten,
- Figuren 5a-d: eine fünfte Ausführungsform einer Koppelvorrichtung in einer schematischen Ansicht, einer Schnittansicht sowie zwei perspektivische Ansichten und
- Figuren 6a-d: einen beispielhaften Verfahrensablauf zur Herstellung einer erfindungsgemäßen Anordnung.

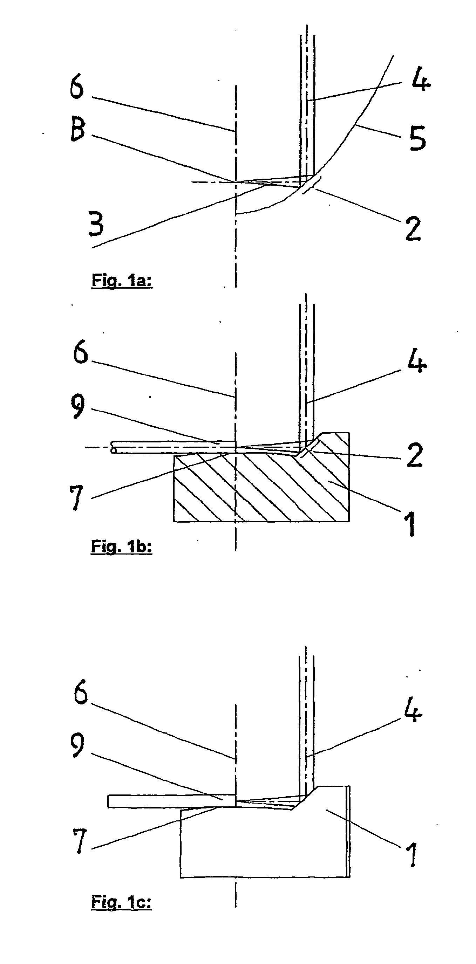

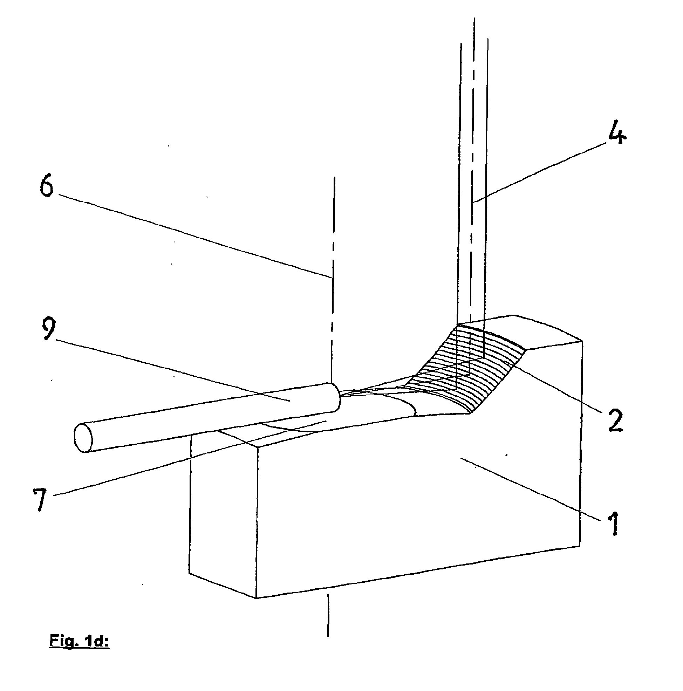

In den Figuren 1a bis 1d ist eine erste Ausführungsform einer Koppelvorrichtung dargestellt Zunächst ist in Figur 1 schematisch das Umleitprinzip demonstriert. Eine reflektierende Fläche 2 folgt im Profil der Form einer Parabel 5, senkrecht zur Ebene der Parabel 5 ist die Krümmung der Fläche 2 kreisförmig, da sie den Ausschnitt der Oberfläche eines Rotationskörpers bildet. Im Brennpunkt B der Parabel erweitert sich ein Lichtstrahl 3, der auf die reflektierende Fläche 2 auftritt und als reflektierter Strahl 4 die Koppelvorrichtung verläßt. Deutlich wird, daß die von dem Brennpunkt B ausgehenden Strahlen durch die Koppelvorrichtung ins Unendliche abgebildet werden. Bei der hier gezeigten Anordnung beträgt der Winkel zwischen dem einfallenden Lichtstrahl 3 und dem ausfallenden Lichtstrahl 4 etwa 90°. In den Figuren 1b und 1c sind ein Schnitt bzw. eine Seitenansicht durch die erste Ausführungsform gezeigt. Die Koppelvorrichtung besteht aus einem Grundkörper 1, der eine reflektierende Fläche 2 aufweist. Des weiteren ist eine Anschlagfläche 7 vorgesehen, die zur Aufnahme einer Glasfaser dient. Wird die Glasfaser 9 derart auf die Anschlagfläche 7 gelegt, daß sie in der Symmetrieachse der Parabel 5 endet, so liegt, geeignete Anordnung der Anschlagfläche 7 vorausgesetzt, die Faserendfläche der Faser 9 in etwa im Brennpunkt B.

In Figur 1d ist eine perspektivische Ansicht zu sehen. Zu erkennen ist, daß die reflektierende Fläche 2 der Form eines Rotationsparaboloiden folgt. Durch die hier gezeigte Koppelvorrichtung kann Licht, das durch die Glasfaser 9 am Ende der Glasfaser divergent austritt, an der reflektierenden Fläche 2 um etwa 90° umgelenkt werden und verläuft dann nahezu parallel. Es versteht sich, daß die parallelen Eigenschaften des reflektierten Lichtstrahls 4 umso besser sind, je genauer die Faserendfläche der Glasfaser 9 im Brennpunkt B angeordnet ist. Um eine möglichst gute Positionierung ohne aufwendige Justierarbeiten zu ermöglichen, ist eine Anschlagfläche 7 vorgesehen, die derart angeordnet ist, daß die Faserendfläche der Glasfaser 9 im auf die Anschlagfläche 7 aufgelegten Zustand exakt in Höhe des Brennpunktes B liegt. Durch Verschieben der Glasfaser 9 auf der Anschlagfläche 7 muß nun die Faserendfläche lediglich so positioniert werden, daß sie in etwa auf der Rotationsachse 6 des Rotationsparaboloiden der reflektierenden Fläche 2 liegt.

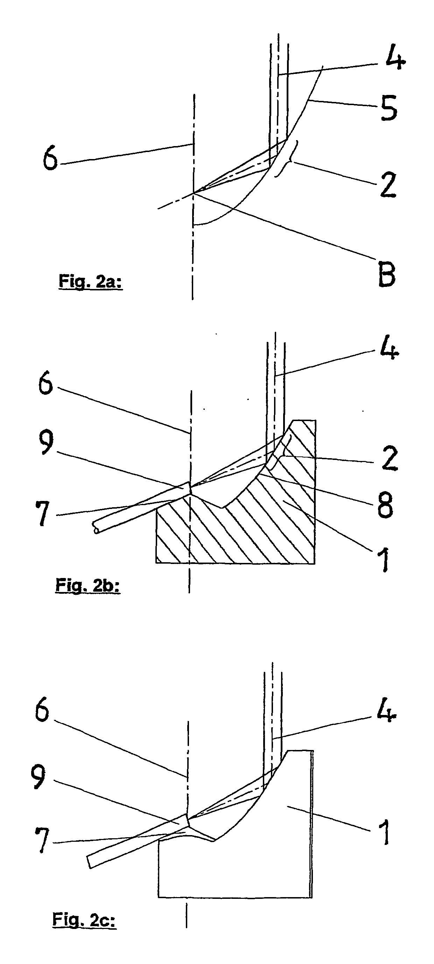

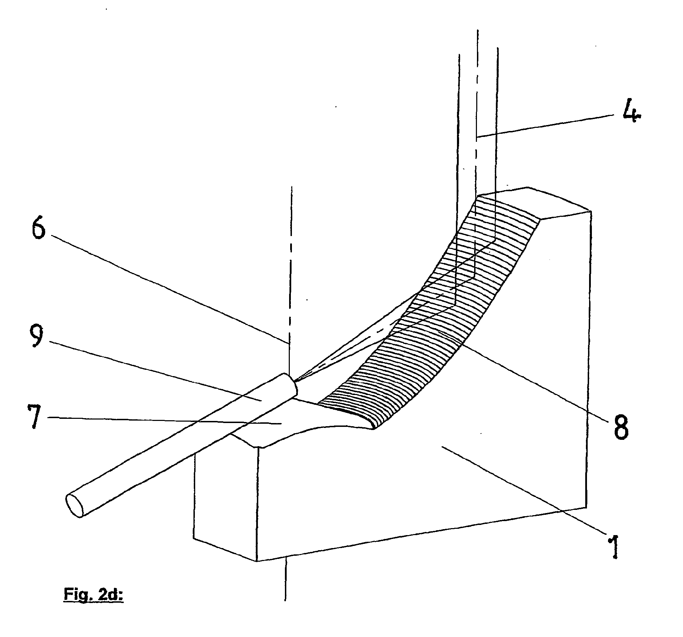

In der in den Figuren 2a bis 2d dargestellten zweiten Ausführungsform wird deutlich, daß der von der Glasfaser 9 ausgehende divergente Lichtstrahl 3 nicht unbedingt senkrecht zu der Rotationsachse 6 verlaufen muß, sondern beispielsweise auch verkippt sein kann. Wesentlich ist lediglich, daß der divergierende Lichtstrahl in etwa vom Brennpunkt B der Parabel ausgeht. Es ist unerheblich, wo der Auftreffpunkt 2 des zu reflektierenden Strahls 3 an der reflektierenden Fläche 8 auftritt.

Mit Vorteil werden für die erfindungsgemäße Anordnung Koppelvorrichtungen in einer "Off-Axis"-Orientierung verwendet, d.h. der von der Glasfaser oder einem anderen Sendeelement ausgehende Lichtstrahl liegt nicht auf der Rotationsachse 6.

Es soll an dieser Stelle ausdrücklich darauf hingewiesen werden, daß bei allen gezeigten Ausführungsformen der Strahlengang auch umgekehrt ausgestaltet werden kann. So ist es beispielsweise möglich, Licht in eine in der Nähe des Brennpunktes angeordnete Endfläche der Glasfaser 9 einzukoppeln, das parallel zu der Rotationsachse 6 auf die reflektierende Fläche 8 trifft.

Die Ausführungsform der Figuren 2a bis d macht deutlich, daß der Winkel zwischen der Faserachse bzw. des zu reflektierenden Lichtstrahls 3 und des reflektierten Lichts 4 auch mehr als 90° betragen kann. Es ist daher je nach Anwendung möglich, nahezu beliebige Winkel zu erreichen. Eine Umlenkung des Lichts auf engstem Raum ist dadurch möglich.

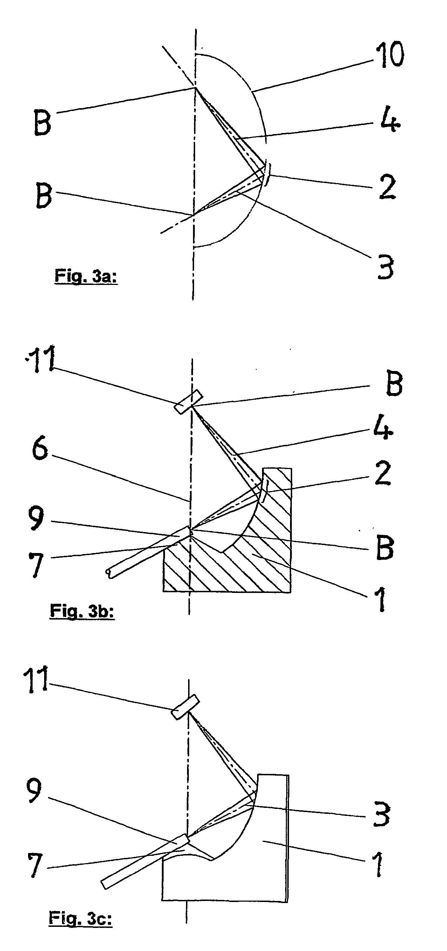

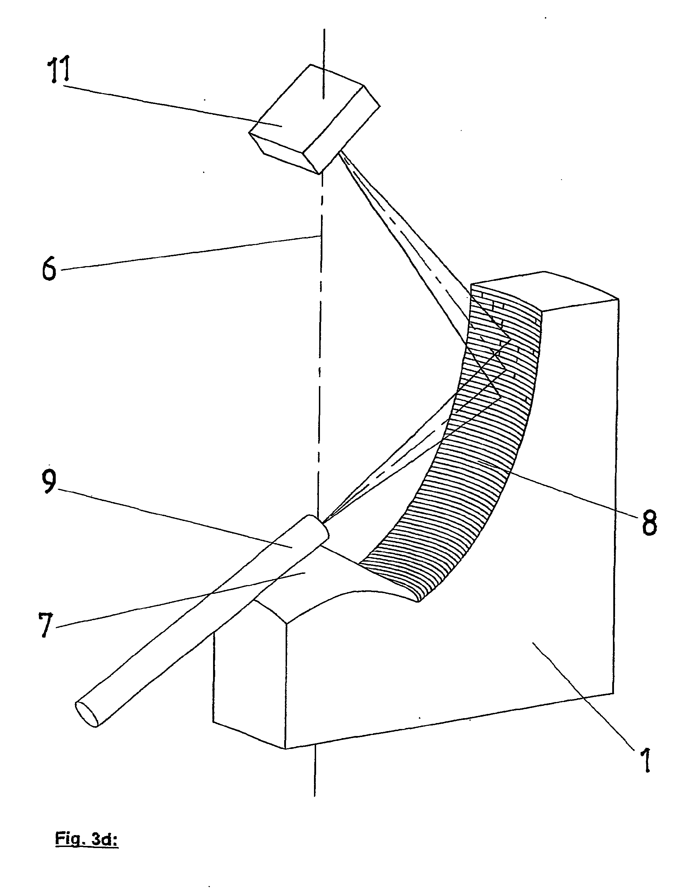

In den Figuren 3a bis d ist eine dritte Ausführungsform der Koppelvorrichtung dargestellt. Wie in der schematischen Skizze von Figur 3a deutlich wird, folgt hier die reflektierende Fläche 2 der Form einer Ellipse 10. Dies hat zur Folge, daß Licht, das von dem einen Brennpunkt B der Ellipse divergierend auf die reflektierende Fläche 2 fällt, in den anderen Brennpunkt B abgebildet wird. Diese Ausführungsform ist dadurch besonders geeignet, um Licht von einem Glasfaserende in das Ende einer anderen Glasfaser einzukoppeln. Dabei müssen lediglich die Endflächen der jeweiligen Glasfasern in den Brennpunkten B der Ellipse angeordnet sein. Es versteht sich, daß in den beiden Brennpunkten B nicht unbedingt Glasfasern 9 angeordnet sein müssen, sondern beispielsweise auch LEDs oder Fotoelemente angeordnet sein können. Durch die erfindungsgemäße Koppelvorrichtung kann leicht eine Kopplung zwischen zwei getrennten Licht führenden Elementen erfolgen.

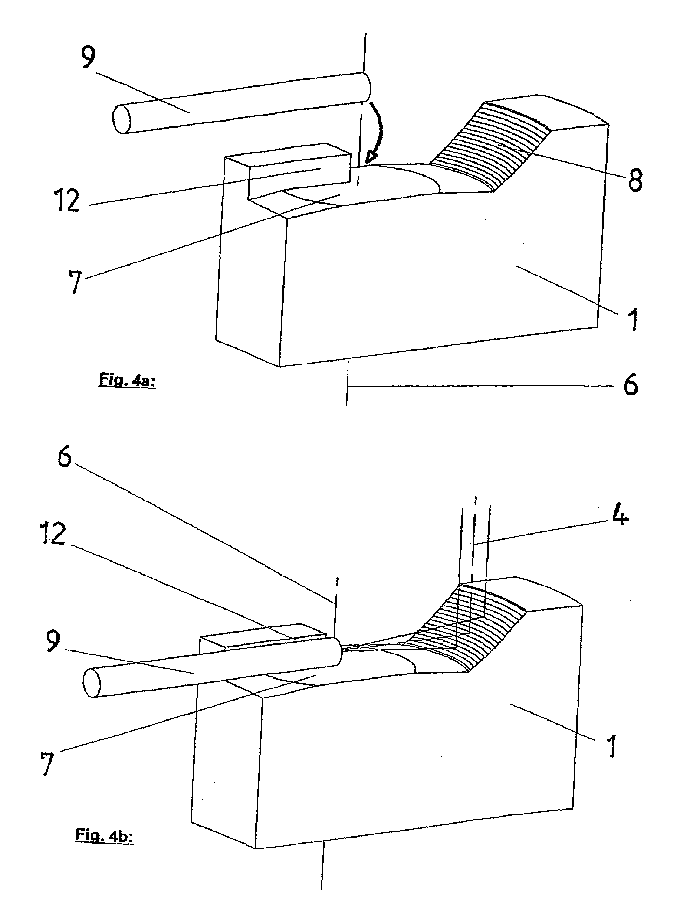

Wie bereits ausgeführt, ist eine Anschlagfläche 7 für die exakte Positionierung der Glasfaser in Richtung der Rotationsachse 6 vorgesehen. Wie in den Figuren 4a und 4b durch den Pfeil angedeutet ist, muß die Glasfaser 9 lediglich auf die Anschlagfläche 7 aufgelegt werden, um eine Justierung der Glasfaser in Richtung der Rotationsachse 6 zu erhalten. In der in den Figuren 4a und b gezeigten Ausführungsform ist ein weiterer Anschlag 12 vorgesehen, der eine Justierung der Faser in Richtung einer Linie, die senkrecht zu der Faserachse und senkrecht zu der Rotationsachse 6 verläuft. Durch die Anschlagfläche 12 ist die Justierung noch einmal deutlich vereinfacht worden. Eine aufwendige Justierung ist nicht notwendig, da die Glasfaser 9 lediglich auf die beiden Anschlagflächen 7, 12 gefegt werden muß. Eine Justierung bzw. Positionierung erfolgt nur noch in Richtung der Faserachse. Es hat sich gezeigt, daß in dieser Richtung für die Faser in der Regel ein wesentlich größerer Toleranzsplelraum besteht als in den anderen beiden Richtungen. Diese Justierung kann beispielsweise mit Hilfe einer optischen Markierung auf dem Grundkörper 1 erfolgen. Da die erfindungsgemäße Koppelvorrichtung weitenlängenunabhängig ist, kann die Justierung auch in den Fällen, in denen eine Signalübertragung mit nicht sichtbarem Licht geplant ist, mit sichtbarem Licht vorgenommen werden. Der Strahlverlauf kann dann von der justierenden Person mit den Augen verfolgt werden und eine Einstellung ist leicht möglich. Wird die Koppelvorrichtung dann mit Licht anderer Wellenlänge in Betrieb genommen, so ist keine Nachjustierung notwendig. Bei den bekannten Koppelanordnungen mit zwei GRIN-Linsen und einem Spiegel muß hingegen die Justierung notwendigerweise auf die Wellenlänge abgestimmt werden, so daß im allgemeinen eine Justierung mit dem Auge nicht möglich ist.

Selbstverständlich ist es auch möglich, einen dritten Anschlag vorzusehen, der sich beispielsweise in etwa senkrecht von dar zweiten Anschlagfläche 12 erstreckt und z. B. eine Art Nase bildet, so daß zur exakten Positionierung die Glasfaser 9 zunächst mit den Anschlagflächen 7 und 12 In Kontakt gebracht wird und dann die Glasfaser 9 in Richtung der reflektierenden Fläche 8 bewegt wird, bis die Glasfaserendifläche an die dritte Anschlagfläche trifft, die die Form einer flachen Stufe hat. Dabei ist zu berücksichtigen, daß der Anschlag, sofern er nicht transparent ausgebildet ist, nicht den Licht leitenden Kem der Faserendfläche verdecken darf.

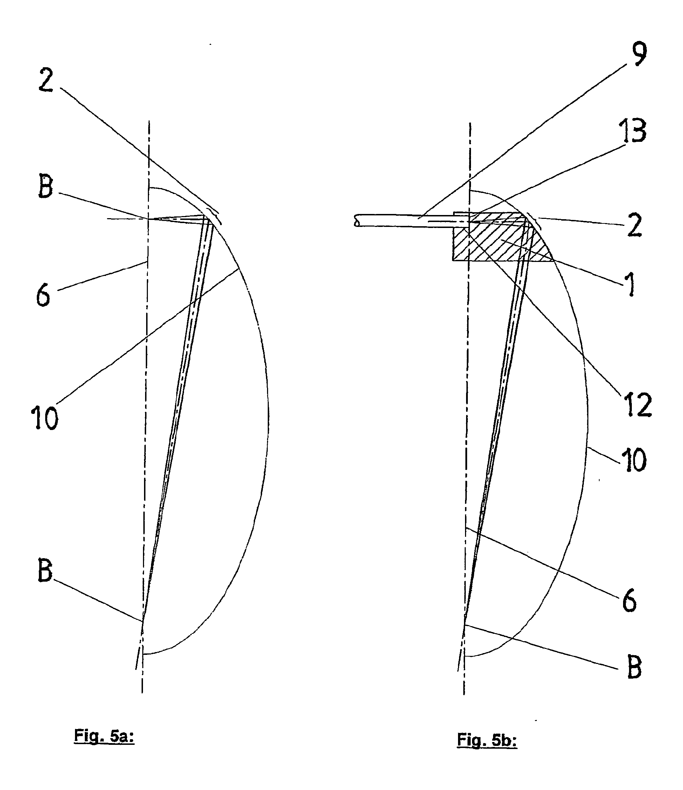

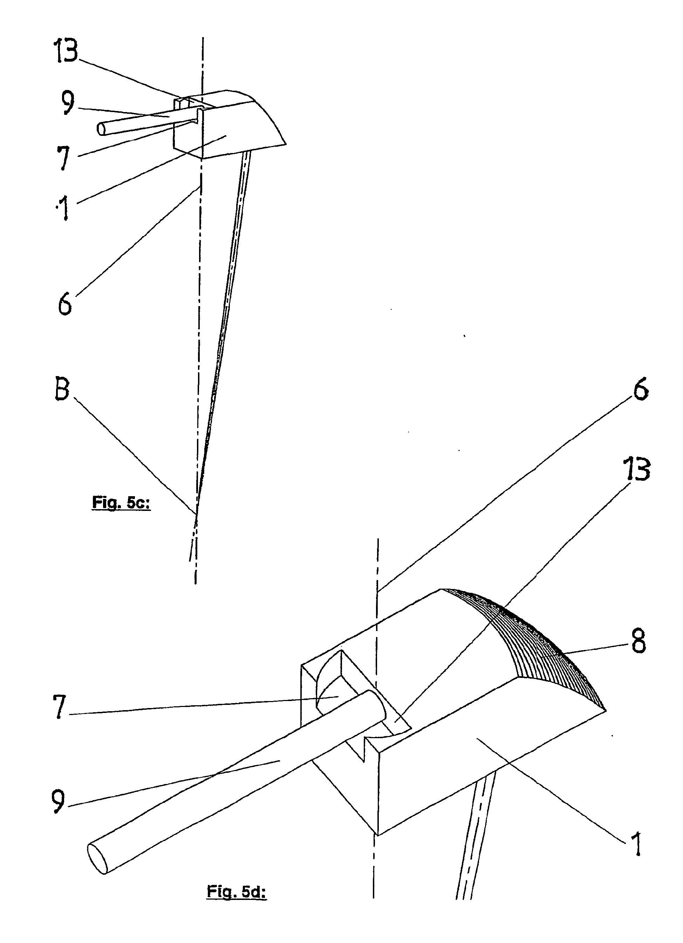

In den Figuren 5a bis d ist eine fünfte Ausführungsform gezeigt, bei der die Reflexion innerhalb eines transparenten Grundkörpers 1 aufgrund von Totalreflexion am Übergang vom optisch dickeren in das optisch dünnere Medium erfolgt. Das Reflexionsprinzip ist schematisch in Figur 5a dargestellt und entspricht im wesentlichen der Figur 3a. Das aus der Faserendfläche der Glasfaser 9 austretende Licht tritt am Brennpunkt B in den transparenten Grundkörper 1 ein. Das Licht verläuft innerhalb des Grundkörpers 1, bis es auf die gekrümmte Außenfläche 2 trifft. Aufgrund des Übergangs zwischen dem optisch dichteren zu dem optisch dünneren Medium kommt es hier zur Totalreflexion. Der reflektierte Lichtstrahl tritt schließlich unter einem Winkel aus dem Grundkörper 1 aus, bei dem keine Totalreflexion stattfindet.

Auch bei dieser Ausführungsform wird das an dem einen Brennpunkt B aus der Glasfaser 9 austretende Licht in den anderen Brennpunkt B abgebildet. Deutlich zu erkennen ist, daß auch hier mehrere Anschläge vorhanden sind. So ist beispielsweise die Anschlagfläche 7 dafür vorgesehen, der Glasfaser 9 als Positionlerungsanschlag in Richtung der Rotationsachse 6 zu dienen. In Richtung der Faserachse ist ein Anschlag 13 vorgesehen.

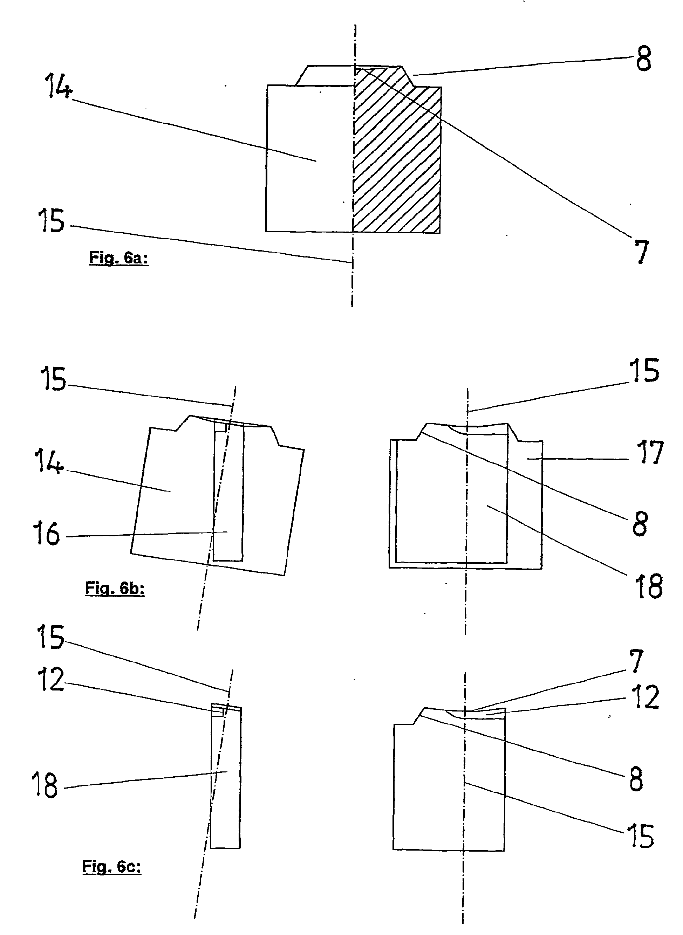

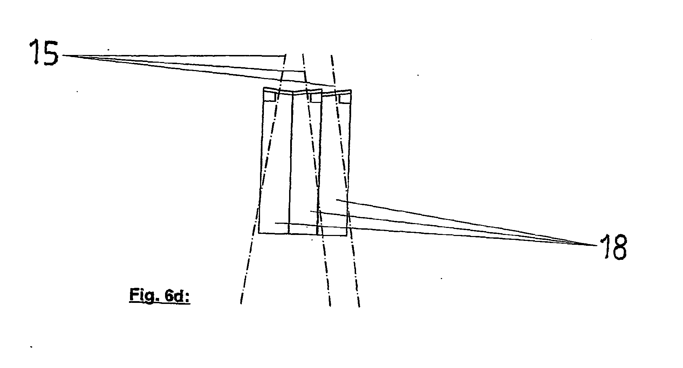

Ein beispielhafter Verfahrensablauf zur Herstellung einer erfindungsgemäßen Anordnung von Koppelvorrichtungen ist in den Figuren 6a bis 6d dargestellt. Figur 6a zeigt, daß zunächst ein Rotationskörper 14 hergestellt wird, der rotationssymmetrisch zu der Rotationsachse 15 ist. Der gezeigte Körper weist bereits eine Fläche 8 auf, die im gezeigten Beispiel einem Rotationsparaboliden folgt. Desweiteren ist bereits die Anschlagfläche 7 zu sehen. Der abgebildete Körper wird durch Drehen hergestellt. Dabei wird die gekrümmte Fläche 8 und die Anschlagfläche 7 in der selben Wertczeugeinspannung gefertigt, so daß die relative Anordnung der Anschlagfläche 7 zur Fläche 8 hochgenau ist.

Im nächsten Schritt wird, wie in den Figuren 6b und 6c angedeutet ist, aus dem Rotationskörper eine Scheibe 16 herausgeschnitten, die nicht notwendigerweise parallel zur Rotationsachse ausgerichtet sein muß. Diese Scheibe 16, die im rechten Bild der Figur 6b in einer Schnittansicht abgebildet ist, weist ebenfalls eine gekrümmte Fläche 8 auf. Um die Koppelvonichtung mit möglichst geringen Außenmaßen herzustellen, kann nun noch der Abschnitt 17 entfernt werden.

Alternativ dazu kann auch zunächst eine Scheibe oder ein Plättchen hergestellt werden, weiches dann mittels Drehen oder Fräsen mit der gekrümmten Fläche 8 versehen wird. Diese Verfahrensvariante hat den Vorteil, das nach dem Drehen oder Fräsen der gekrümmten Fläche 8 kein weiterer Verfahrensschritt mehr notwendig ist, so daß die Gefahr einer nachträglichen Beeinträchtigung der Qualität der gekrümmten Fläche minimiert wird.

An dieser Stelle soll betont werden, daß es auch möglich ist, aus dem Rotationskörper eine Vielzahl von Koppelvorrichtungen 'herauszuschneiden'. Dabei muß jedoch gegebenenfalls der Positionierungsanschlag als getrenntes Teil zur Verfügung gestellt werden.

Sofern der Rotationskörper aus transparentem Material hergestellt wurde, kann das in den Figuren 6c gezeigte entstehende Teil bereits als Koppelvorrichtung ähnlich der in den Figuren 5a bis 5d gezeigten Ausführungsform verwendet werden.

Alternativ dazu kann aber auch das Teil 18 als Formwerkzeug dienen. Bei Bedarf kann zusätzlich Material abgetragen werden, so daß sich im Formteil ein zweiter Anschlag 12 bildet.

In der Figur 6d ist eine Anordnung von mehreren aneinandergereihten Formwerkzeugen 18, 18', 18" dargestellt. Durch Abformung entstehen im gezeigten Beispiel gleich drei verschiedene Koppelvorrichtungen. Dabei können die Rotationsachsen 15, 15', 15" der Formwerkzeuge gegeneinander verkippt sein.

Die Koppelvorrichtung mißt in der bevorzugten Ausführungsform in keiner Richtung mehr als 5 mm und kann noch deutlich kleiner hergestellt werden.
Durch die Koppelvorrichtung ist es nun möglich, auf engstem Raum den Lichtweg durch Reflexion um einen Winkel abzulenken. Dies führt, insbesondere in der optischen Tele- und Datenkommunikation zu einer wesentlich kompakteren Bauform der verwendeten Geräte.

So ist es beispielsweise möglich, mehrere von verschiedenen Richtungen ankommende Glasfasern mit entsprechenden Koppelvorrichtungen derart umzulenken, daß sie in die einzelnen Lichtleiter eines kleinen Steckers umgelenkt werden.

Im Gegensatz zu sphärischen Linsensystemen oder GRIN-Linsen zeigt die erfindungsgemäße Koppelvorrichtung keinerlei Abbildungsfehler. Überdies wird nur eine optische Oberfläche benötigt, so daß die Fertigung kostengünstiger wird und gleichzeitig die sonst unumgängliche Toleranzaddition vermieden wird.

Die Elemente der Koppelvorrichtung können mit Vorteil so angeordnet werden, daß beim Spritzgießen, Heißprägen usw., daß eine Entformung in einer einzigen Richtung erfolgen kann, so daß ein Einfachwerkzeug zur Anwendung kommen kann. Dies führt zu einem wesentlich einfacherem und kostengünstigerem Formwerkzeug

Im Gegensatz dazu müssen beispielsweise bei bikonvexen Linsen nicht nur die beiden optischen Flächen an sich sehr genau gefertigt sein, sondern diese müssen darüber hinaus auch sehr exakt relativ zueinander positioniert sein. Daher ist es durch das erfindungsgemäße Verfahren möglich, Koppelvorrichtungen beispielsweise durch Abformung herzustellen. Dadurch, daß im Gegensatz zu Linsen keine genaue Ausrichtung von zwei sich gegenüberliegenden Oberflächen zueinander notwendig ist, ist das Abformen ohne großen Justieraufwand möglich.

Anders als bei üblichen Umlenkverfahren mit GRIN-Linsen ist bei der erfindungsgemäßen Koppelvorrichtung kein Material im Strahlengang erforderlich, so daß der Absorptionsveriust deutlich geringer ist.

Die Koppelvorrichtung kann aus nahezu jedem beliebigen Material gefertigt werden. Das Material muß weder transparent noch von besonderer optischer Reinheit sein. Dadurch ist es kostengünstiger herstellbar und zudem kann durch geeignete Materialwahl beispielsweise die Anfälligkeit gegenüber starker Temperaturschwankung minimiert worden.

Ein weiterer Vorteil der erfindungsgemäßen Koppelvorrichtung ist, daß die Abbildung absolut wellenlängenunabhängig erfolgt. Mit anderen Worten ist die Koppelvorrichtung für einen sehr breiten Wellenlängenbereich nutzbar. Überdies ist es beispielsweise möglich, zur einfachen optimalen Justierung der Sende- und Empfangselemente eine Kopplung mit einer anderen Wellenlänge, z.B. mit sichtbarem Licht, durchzuführen. Dadurch, daß der Strahlenverlauf für die justierende Person sichtbar ist, kann die Justierung leicht vorgenommen werden. Nach erfolgter Justierung kann selbstverständlich mit der Koppelvorrichtung auch Licht von völlig anderen Wellenlängen reflektiert werden, ohne daß eine Neujustierung notwendig ist.

Die Koppelvorrichtung kann sehr klein ausgefertigt werden. Die reflektierende Fläche kann auf eine Fläche von einigen wenigen Quadratmillimetern eingeschränkt werden, so daß es möglich ist, eine ganze Reihe von Koppelvorrichtungen auf kleinstem Raum parallel zueinander anzuordnen. Im wesentlichen durch die erfindungsgemäßen Anschlagflächen kann die Faser bzw. das Sende- und Empfangselement mit sehr geringern oder sogar ohne Justageaufwand montiert werden. Bei geeigneter Wahl der Anschlagflächen kann die Montierung der Faser auf der Koppelvorrichtung auch kostengünstig automatisiert werden.

### Bezugszeichen

- (1): Grundkörper
- (2): aktive reflektierende Fläche
- (3): einfallender Lichtstrahl
- (4): ausfallender Lichtstrahl
- (5): Parabel
- (6): Rotationsachse
- (7): erste Anschlagfläche
- (8): reflektierende Fläche
- (9): Sende- oder Empfangselement
- (10): Ellipse
- (11): Sende- oder Empfangselement
- (12): zweite Anschlagfläche
- (13): dritte Anschlagfläche
- (14): Rotationskörper
- (15): Rotationsachse des Rotationskörpers
- (16): Scheibe
- (17): Abschnitt
- (18): Formwerkzeug
- (B): Brennpunkt

## Patentansprüche

1. Anordnung bestehend aus mehreren, einstückig miteinander verbundenen Koppelvorrichtungen aus Kunststoff für das Ein- und/oder Auskoppeln von elektromagnetischen Wellen in bzw. aus einem Sende- oder Empfangselement mit jeweils einer reflektierenden Fläche, wobei die reflektierende Fläche gekrümmt ist, und mit jeweils mindestens einem Anschlag für die Justierung eines Sende- oder Empfangselementes, wobei Anschlag und reflektierende Fläche derart angeordnet sind, daß das Material, aus welchem die Kopplungsvorrichtung besteht, nicht Teil des optischen Pfades zwischen dem Sende- oder Empfangselement und der reflektierenden Fläche ist, wobei Anschlag und reflektierende Fläche einstückig ausgebildet sind, wobei die reflektierende Fläche jeweils als Teil einer Rotationsfläche mit einem Kegelschnitt als erzeugende Hüllkurve ausgebildet ist und die Rotationsachsen der reflektierenden Flächen gegeneinander verkippt sind.

2. Anordnung nach Anspruch 1, **dadurch gekennzeichnet, daß** ein Schnitt durch die gekrümmte Fläche (8) in etwa einem Abschnitt einer Parabel (5), Hyperbel oder Ellipse (10) entspricht.

3. Anordnung nach Anspruch 1 oder 2, **dadurch gekennzeichnet, daß** die reflektierende Fläche (8) in etwa die Form eines Abschnitts eines Rotationsparaboloiden (5), Rotationsellipsoiden (10) oder Rotationshyperboloiden hat.

4. Anordnung nach einem der Ansprüche 1 bis 3, **dadurch gekennzeichnet, daß** mindestens ein Sende- oder Empfangselement (9, 11) vorgesehen ist, das elektromagnetische Wellen (3, 4) auf eine reflektierende Fläche (8) sendet oder elektromagnetische Wellen (3, 4) von einer reflektierenden Fläche (8) empfängt.

5. Anordnung nach Anspruch 4, **dadurch gekennzeichnet, daß** zumindest ein Sende- oder Empfangselement (9, 11) in der Nähe eines Brennpunkts B einer reflektierenden Fläche (8) angeordnet ist.

6. Anordnung nach Anspruch 4 oder 5, **dadurch gekennzeichnet, daß** mindestens ein Sende- oder Empfangselement (9, 11) ein Wellenleiter, vorzugsweise eine Glasfaser, ist.

7. Anordnung nach Anspruch 6, **dadurch gekennzeichnet, daß** der Anschlag (7, 12, 13) derart ausgebildet ist, daß er die Ausrichtung eines Sende- und Empfangselements (9, 11) in zwei, vorzugsweise in drei, im wesentlichen zueinander senkrechten Richtungen erlaubt.

8. Verfahren zur Herstellung einer Anordnung nach einem der Ansprüche 1 bis 7, wobei die reflektierende Fläche als Teil einer Rotationsfläche mit einem Kegelschnitt als erzeugende Hüllkurve hergestellt wird, zunächst eine Negativform bzw. ein Formwerkzeug angefertigt wird und die Anordnung durch anschließendes Abformen hergestellt wird, entweder zunächst ein Rotationskörper hergestellt wird und hieraus ein Formwerkzeug im wesentlichen in Form einer Scheibe herausgeschnitten wird oder zunächst ein Plättchen oder eine Scheibe hergestellt wird und dann die reflektierende Fläche gedreht oder gefräst wird und wobei für die Abformung mehrere Formwerkzeuge nebeneinander angeordnet werden, so daß in einem Abformschritt mehrere Koppelvorrichtungen gleichzeitig hergestellt werden, wobei die Rotationsachsen der Rotationsflächen der Formwerkzeuge gegeneinander verkippt sind.

9. Verfahren nach Anspruch 8, **dadurch gekennzeichnet, daß** an der Negativform ein Bereich in der Weise abgestochen wird, daß das abgeformte Positiv zumindest einen weiteren Anschlag aufweist.

10. Verfahren zum Ein- und/oder Auskoppeln von optischen Signalen in oder aus Empfangselementen, wie z. B. Lichtfasern, Lichtwellenleitern, Linsen, Spiegeloptiken oder Systemen mit Gradientenindexlinsen, **dadurch gekennzeichnet, daß** eine Anordnung nach einem der Ansprüche 1 bis 7 verwendet wird.

## Claims

1. An arrangement comprising a plurality of coupling devices of plastic material which are integrally connected together for coupling electromagnetic waves respectively into and/or out of a transmitting or receiving element each with a respective reflecting surface, wherein the reflecting surface is curved, and each with at least one respective abutment for the adjustment of a transmitting or receiving element, wherein the abutment and the reflecting surface are so arranged that the material constituting the coupling device is not part of the optical path between the transmitting or receiving element and the reflecting surface, wherein the abutment and the reflecting surface are of an integral structure, wherein the reflecting surface is respectively in the form of part of a surface of revolution with a conical section as a generating envelope curve and the axes of rotation of the reflecting surfaces are tilted relative to each other.

2. An arrangement according to claim 1 **characterised in that** a section through the curved surface (8) approximately corresponds to a portion of a parabola (5), hyperbola or ellipse (10).

3. An arrangement according to claim 1 or claim 2 **characterised in that** the reflecting surface (8) approximately has the shape of a portion of a paraboloid of revolution (5), an ellipsoid of revolution (10) or a hyperboloid of revolution.

4. An arrangement according to one of claims 1 to 3 **characterised in that** there is provided at least one transmitting or receiving element (9, 11) which transmits electromagnetic waves (3, 4) on to a reflecting surface (8) or receives electromagnetic waves (3, 4) from a reflecting surface (8).

5. An arrangement according to claim 4 **characterised in that** at least one transmitting or receiving element (9, 11) is arranged in the proximity of a focal point B of a reflecting surface (8).

6. An arrangement according to claim 4 or claim 5 **characterised in that** at least one transmitting or receiving element (9, 11) is a waveguide, preferably a glass fibre.

7. An arrangement according to claim 6 **characterised in that** the abutment (7, 12, 13) is so designed that it permits the alignment of a transmitting and receiving element (9, 11) in two and preferably three substantially mutually perpendicular directions.

8. A method of manufacturing an arrangement according to one of claims 1 to 7 wherein the reflecting surface is manufactured as part of a surface of revolution with a conical section as a generating envelope curve, firstly a negative mould or a mould tool is produced and the arrangement is manufactured by subsequent moulding, either firstly a body of revolution is manufactured and a mould tool is cut out therefrom substantially in the form of a disc or firstly a small plate or a disc is manufactured and then the reflecting surface is turned or milled, and wherein for the moulding operation a plurality of mould tools are arranged in mutually juxtaposed relationship so that in a moulding step a plurality of coupling devices are manufactured at the same time, wherein the axes of rotation of the surfaces of revolution of the mould tools are tilted relative to each other.

9. A method according to claim 8 **characterised in that** a region on the negative mould is cut off in such a way that the moulded positive has at least one further abutment.

10. A method of coupling optical signals into or out of receiving elements such as for example optical fibres, optical waveguides, lenses, mirror optics or systems with gradient index lenses, **characterised in that** an arrangement according to one of claims 1 to 7 is used.

## Revendications

1. Arrangement de plusieurs dispositifs de couplage en matière plastique qui sont reliés d'une seule pièce et qui sont destinés à injecter des ondes électromagnétiques dans un élément d'émission ou de réception ou à recevoir des ondes électromagnétiques sortant d'un élément d'émission ou de réception, chacun des dispositifs de couplage présentant une surface réfléchissante, la surface réfléchissante étant incurvée, et comportant au moins une butée permettant de régler un élément d'émission ou de réception, la butée et la surface réfléchissante étant disposées de sorte que le matériau dont est constitué le dispositif de couplage ne fait pas partie du trajet optique entre l'élément d'émission ou de réception et la surface réfléchissante, la butée et la surface réfléchissante étant conformées d'une seule pièce, la surface réfléchissante étant conformée en partie de surface de révolution présentant une section conique, comme enveloppe génératrice et les axes de rotation des surfaces réfléchissantes étant inclinés l'un par rapport à l'autre.

2. Arrangement selon la revendication 1, **caractérisé en ce qu'**une coupe de la surface incurvée (8) correspond à peu près à une portion de parabole (5), d'hyperbole ou d'ellipse (10).

3. Arrangement selon la revendication 1 ou 2, **caractérisé en ce que** la surface réfléchissante (8) a à peu près la forme d'une portion de paraboloïde de révolution (5), d'ellipsoïde de révolution (10) ou d'hyperboloïde de révolution.

4. Arrangement selon l'une des revendications 1 à 3, **caractérisé en ce qu'**il est prévu au moins un élément d'émission ou de réception (9, 11) qui émet des ondes électromagnétiques (3, 4) en direction d'une surface réfléchissante (8) ou qui reçoit des ondes électromagnétiques (3, 4) provenant d'une surface réfléchissante (8).

5. Arrangement selon la revendication 4, **caractérisé en ce qu'**au moins un élément d'émission ou de réception (9, 11) est placé à proximité d'un foyer B d'une surface réfléchissante (8).

6. Arrangement selon la revendication 4 ou 5, **caractérisé en ce qu'**au moins un élément d'émission ou de réception (9, 11) est une fibre optique, avantageusement une fibre de verre.

7. Arrangement selon la revendication 6, **caractérisé en ce que** la butée (7, 12, 13) est conformée de façon à permettre l'orientation d'un élément d'émission et de réception (9, 11) dans deux, avantageusement trois, directions qui sont sensiblement perpendiculaires entre elles.

8. Procédé de fabrication d'un arrangement selon l'une des revendications 1 à 7, dans lequel on réalise la surface réfléchissante sous la forme d'une partie d'une surface de révolution présentant une section conique comme enveloppe génératrice, on fabrique tout d'abord un moule en négatif respectivement un outil de moulage puis on réalise l'arrangement par moulage, on réalise tout d'abord un corps de révolution à partir duquel on découpe un outil de moulage ayant sensiblement la forme d'un disque ou on réalise tout d'abord une plaquette ou un disque puis on réalise la surface réfléchissante par tournage ou fraisage, et dans lequel on dispose plusieurs outils de moulage les uns à côté des autres pour effectuer le moulage de façon à réaliser simultanément plusieurs dispositifs de couplage en une étape de moulage, les axes de rotation des surfaces de révolution des outils de moulage étant inclinés les uns par rapport aux autres.

9. Procédé selon la revendication 8, **caractérisé en ce qu'**une région est découpée au niveau du moule négatif de manière à ce que le positif découpé comporte au moins une autre butée.

10. Procédé d'injection de signaux optiques dans des éléments de réception et/ou de réception de signaux optiques des éléments de réception, comme par exemple des fibres optiques, des guides d'ondes, des lentilles, des optiques à miroir ou des systèmes à lentilles à gradient d'indice, **caractérisé en ce que** l'on utilise un arrangement selon l'une des revendications 1 à 7.
